# EUROPEAN PATENT APPLICATION

(11) **EP 0 657 988 A2**
(43) Date of publication of application: **14.06.1995**
(21) Application number: 94119489.6
(22) Date of filing: 09.12.1994
(51) Int. Cl.: H02P 5/52, H02P 5/50

(54) **Multiple pulse width modulation circuit**

(30) Priority: 09.12.1993 US 163627
(71) Applicant: PITNEY BOWES INC., Stamford Connecticut 06926-0700 (US)
(72) Inventor: Lee, Young W., Orange, CT 06477 (US); Moh, Sungwon, Wilton, CT 06897 (US); Muller, Arno, Westport, CT 06880 (US)
(74) Representative: Avery, Stephen John

(57) **Abstract**

A control system includes a programmable microprocessor (13) in bus communication with memory units (10) and a plurality of motor drivers (550), each of the motor drivers being in electrical communication with a respective motor (552) for controlling the operation of the respective motor in response to data from the microprocessor (13). The microprocessor data includes PWM control data and clock data. Data registers (497) are in communication with the data bus (18) for reading and writing of PWM control data to and from the data registers (497). A programmable clock (498) is provided for reading the clock data and producing a plurality of independent clock pulses in response to the clock data. An address decoder is responsive to an address on the address bus (17) for enabling the programmable clock (498) for programming and for enabling others registers for writing of the PWM data to the data registers. A multi-stage PWM generator (499) is provided having a plurality of independent PWM stages. Each of the PWM stages is in electrical communication with a respective motor driver (550), and each PWM stage, generating an independent PWM signal responsive to the PWM data and a clock pulse.

## Description

The present invention relates to motor control systems and is applicable to machine control systems having a plurality of motors.

European Applications of even date are filed concurrently herewith corresponding to the following U.S. applications commonly assigned to Pitney Bowes Inc.: US Patent Application Serial No. 08/165,134, entitled DUAL MODE TIMER-COUNTER; US Patent Application Serial No. 08/137,460, entitled DYNAMICALLY PROGRAMMABLE TIMER-COUNTER; US Patent Application Serial No. 08/163,774, entitled MEMORY ACCESS PROTECTION CIRCUIT WITH ENCRYPTION KEY; US Patent Application Serial No. 08/163,811, entitled MEMORY MONITORING CIRCUIT FOR DETECTING UNAUTHORIZED MEMORY ACCESS; US Patent Application Serial No. 08/163,771, entitled MULTI-MEMORY ACCESS LIMITING CIRCUIT FOR A MULTI-MEMORY DEVICE; US Patent Application Serial No. 08/163,790, entitled ADDRESS DECODER WITH MEMORY ALLOCATION FOR A MICRO-CONTROLLER SYSTEM; US Patent Application Serial No. 08/163,810, entitled INTERRUPT CONTROLLER FOR AN INTEGRATED CIRCUIT; US Patent Application Serial No. 08/163,812, entitled ADDRESS DECODER WITH MEMORY WAIT STATE CIRCUIT; US Patent Application Serial No. 08/163,813, entitled ADDRESS DECODER WITH MEMORY ALLOCATION AND ILLEGAL ADDRESS DETECTION FOR A MICRO-CONTROLLER SYSTEM; US Patent Application Serial No. 08/164,100, entitled PROGRAMMABLE CLOCK MODULE FOR POSTAGE METERING CONTROL SYSTEM; and US Patent Application Serial No. 08/163,629, entitled CONTROL SYSTEM FOR AN ELECTRONIC POSTAGE METER HAVING A PROGRAMMABLE APPLICATION SPECIFIC INTEGRATED CIRCUIT.

The disclosure of these European applications are hereby incorporated herein by reference.

In machine control systems of the type employed in electronic postage meters (EPM) , it is conventional to design a specific EPM control system for each meter model. As part of that control system, it is conventional to design a microprocessor based controller for each machine model because of variations in the system operating speed and number of machine motors utilized. The conventional architecture of such control systems includes a microprocessor based control system having a microprocessor in bus communication with a plurality of memory units and applications specific integrated circuit (ASIC). As part of the ASIC circuitry, it is known to include a pulse width modulation (PWM) circuit which is specifically parameterized to interface with the particular motors employed in the EPM model.

It is an objective of the present invention to present a pulse width modulation circuit which is programmable for operation with any one of a plurality of motors.

It is a further objective of the present invention to present a pulse width modulation circuit which is multi-staged, wherein each stage is independently programmable for operation with any one of a plurality of motors.

It is a further objective of the present invention to present a PWM circuit which allows a standard motor to be employed wherein the duty cycle is programmable to permit motor overdrive and protection.

Preferably, the EPM motor control system includes a microprocessor in bus communication with memory units, and ASIC, and a plurality of motor drivers. Each motor driver is preferably associated with a particular motor. The ASIC is preferably comprised of an address decoder, PWM registers, multi-staged programmable clock, and a multi-staged programmable PWM generator. The microprocessor places the PWM address on the address bus, which is then received by a address decoder. In response to the particular address, the address decoder then enables the PWM register to read from the data bus the PWM data for the respective motors and enables the programmable multi-stage clock. The control signal from the address decoder enables the appropriate stages of the multi-stage PWM generator to initiate the PWMs for that particular stage which is directed from the respective PWM generator stage to the particular motor driver for controlling actuation of the motors.

It should be appreciated that at least one embodiment of the present invention may allow one to utilize motors rated for much lower voltage than the voltage used for driving it and control the duty cycle of the motors to protect the motors from being overdriven to destruction in a manner which will be further described in the subsequent detailed description of the preferred embodiment.

For a better understanding of the invention and to show how the same may be carried into effect, reference will now be made, by way of example, to the accompanying drawings, in which:
Fig. 1 is a schematic of a control system in accordance with one embodiment of the present invention;
Fig. 2 is a schematic of a PWM stage in accordance with one embodiment of the present invention; and
Figs. 3A and 3B are logic diagrams of a single stage operation of the PWM generator.

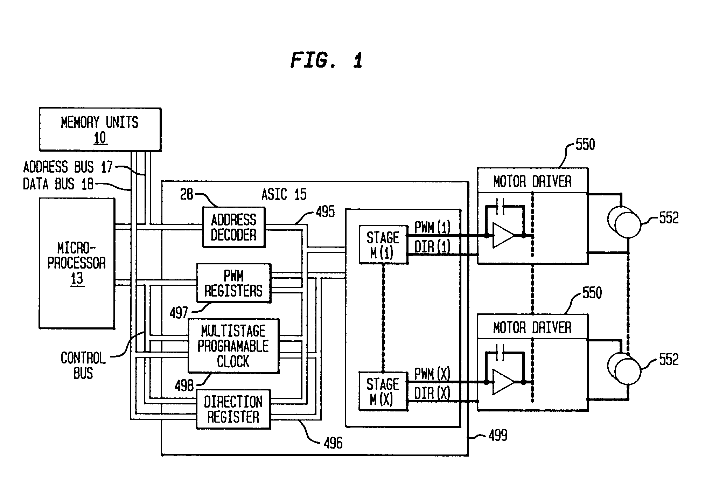

Referring to Fig. 1, the control system includes a microprocessor 13 in communication with memory units 10 through an address bus 17 and data bus 18. The address bus 17 and data bus 18 also communicate the microprocessor to the ASIC 15. The ASIC 15 is comprised, among other things, an address decoder 28, PWM registers 497 and multi-stage programmable clock 498, and a multi-stage PWM generator 499. Internally, the address decoder 28, PWM register 497, multi-stage programmable clock 498, direction register and multi-stage PWM generator 499 are in communication by control lines 495 and an internal data bus 496. Each stage of the multi-stage PWM generator 499 outputs to a respective motor driver 550. The respective motor drivers 550 are in line communication with a motor 552.

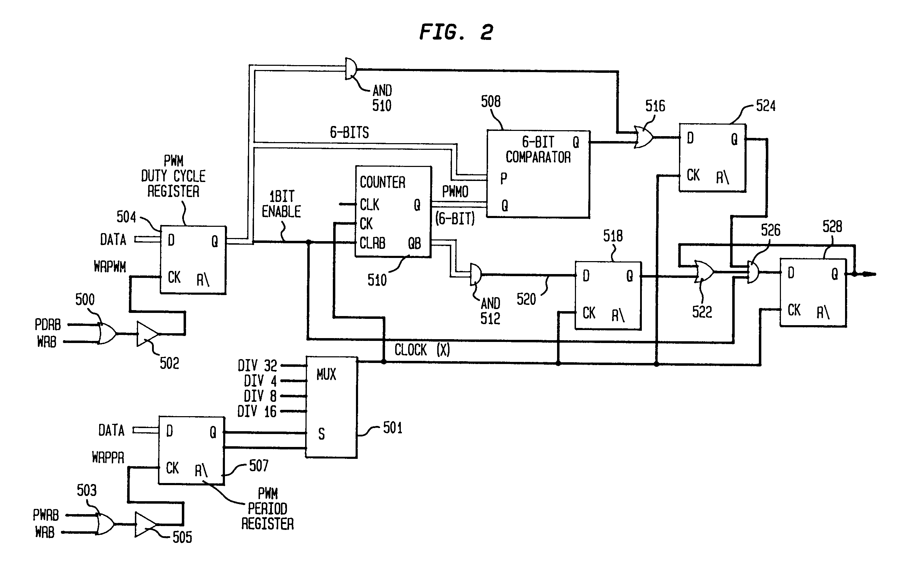

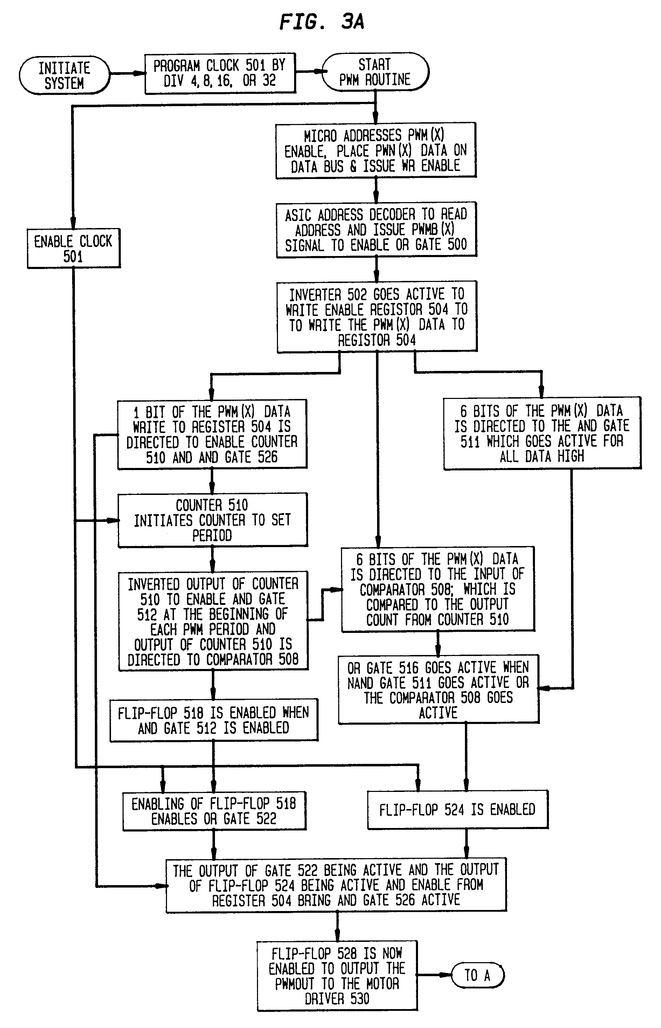

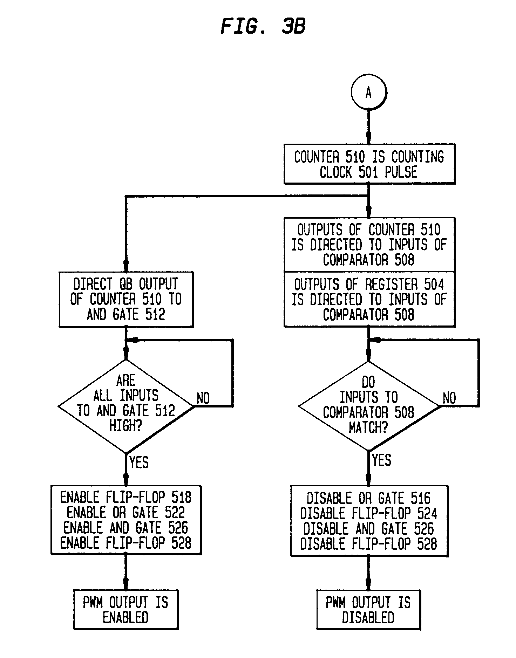

Referring to Figs. 2 and 3, after the microprocessor 15 initializes the system, the microprocessor addresses the multi-stage programmable clock which is enabled to read the data from the data line by response of the address decoder 28, which issues a write enable. The write enable enables the OR gate 503 which acts through gate 505 to write enable the PWM period register 507 to read data from the data bus into that register. This action sets the select inputs of multiplexer 501 to select one of the respective stage clock inputs to produce a clock pulse which is the system clock divided by 4, 8, 16 or 32. The clock output of 501 is directed to counter 510. The period is the time it takes the counter 510 to go through its full range at the selected clock rate. Upon the proper conditions as determined by the microprocessor within the total system programming, the microprocessor enters the start PWM routine (specifically shown in Fig. 3). Upon initiation of the PWM routine, the microprocessor addresses the PWM stages which it wants enabled and sequentially places the PWM data for the respective stage on the data bus and issues a write enable. The write enable enables the OR gate 500 which acts through gate 502 to enable the PWM duty cycle register to read the duty cycle data from the data bus.

One bit of the data written to the PWM duty cycle register 504 enables a counter 510 to initiate a count. Six bits of the data from the PWM duty cycle register are directed to AND gate 511 which protects against a 100%) duty cycle. It should be appreciated that the AND gate 511 only becomes active when the six bit output is all high. The output of AND gate 511 is received by OR gate 516. The six bits are also delivered to a comparator 508. Normally, (no match of inputs) the output from the comparator 508 is low which causes gate 516 and a flip-flop 524 to be high.

When the timer-counter 510 is enabled to start counting, its output is sent to the six bit comparator and to a AND gate 512. It should be appreciated that the AND gate 512 becomes active at every beginning of the PWM period, therefore enabling a flip-flop 518, and an OR gate 522. When the AND gate 526 is enabled at the beginning of the PWM period, a flip-flop 528 is set high to make the PWM output active.

When the counter 510 reaches the prescribed duty cycle stored in register 504, the comparator 508 becomes active, disabling the OR gate 516, the flip-flop 524, the AND gate 526, and the flip-flop 528, thereby disabling the PWM output until the beginning of the next PWM period is reached. For the 100% duty cycle, the AND gate 511 is activated all the time, prohibiting the OR gate 516 to be disabled, thereby maintaining the PWM output high all the time. For the 0% duty cycle, the comparator output is activated at the beginning of the cycle disabling the OR gate 516, thereby maintaining the PWM output low all the time.

In this manner, it is observed that the power application to the motors is enabled for a time programmed by the microprocessor 13 writing to register 504 in each cycle, the duration of which is programmed by the microprocessor 13 writing to register 507. Thus, the ratio of time with power on to cycle time as well as the cycle itself are configurable for each application. It is also recognized that motors may be driven with a voltage much higher than the voltage they are rated for by limiting the power input through modulation.

## Claims

1. An control system having a programmable microprocessor (13) in bus communication with memory units (10) and a plurality of motor drivers (550), each of said motor drivers being in electrical communication with a respective motor (552) for controlling the operation of said respective motor in response to data from said microprocessor (13), characterized by:
said microprocessor data including PWM control data and clock data;
register means (497) in bus communication with said data bus (18) for reading and writing of PWM control data to and from said register means (497),
programmable clock means (498) for reading said clock data and producing a plurality of independent clock pulses in response to said clock data;
a multi-stage PWM generator (499) having a plurality of independent PWM stages;
each of said PWM stages being in electrical communication with a respective motor driver(550); and
each PWM stage being responsive to said PWM data written to register means and one of said clock pulses for generating an independent PWM signal responsive to said PWM data and said clock pulse.

2. A control system having a programmable microprocessor (13) in bus communication with memory units (10) and a plurality of motor drivers (550), each of said motor drivers being in electrical communication with a respective motor (552) for controlling the operation of said respective motor in response to data from said microprocessor (13), characterized by:
said microprocessor data including PWM control data and clock data;
register means (497) in bus communication with said data bus (18) for reading and writing of PWM control data to and from said register means (497);
programmable clock means (498) for reading said clock data and producing a plurality of independent clock pulses in response to said clock data;
address decoder means (28) responsive to an address on said address bus (17) for enabling said programmable clock means (498) for programming of said programmable clock means;
a multi-stage PWM generator (499) having a plurality of independent PWM stages;
each of said PWM stages being in electrical communication with a respective motor driver (550); and
each PWM stage being responsive to said PWM data written to register means and one of said clock pulses for generating an independent PWM signal responsive to said PWM data and said clock pulse.

3. A control system having a programmable microprocessor (13) in bus communication with memory units (10) and a plurality of motor drivers (550), each of said motor drivers being in electrical communication with a respective motor (552) for controlling the operation of said respective motor in response to data from said microprocessor (13), characterized by:
said microprocessor data including PWM control data and clock data;
register means (497) in bus communication with said data bus (18) for reading and writing of PWM control data to and from said register means (497);
programmable clock means (498) for reading said clock data and producing a plurality of independent clock pulses in response to said clock data;
address decoder means (28) responsive to an address on said address bus (17) for enabling said programmable clock means (498) for programming of said programmable clock means and means responsive to another of said addresses on said address bus (17) for enabling said register means (497) for writing of said PWM data to said register means;
a multi-stage PWM generator (499) having a plurality of independent PWM stages;
each of said PWM stages being in electrical communication with a respective motor driver (550), and
each PWM stage being responsive to said PWM data written to register means and one of said clock pulses for generating an independent PWM signal responsive to said PWM data and said clock pulse.

4. A control system as claimed in claim 1, 2 or 3 wherein said PWM signal is an oscillating signal and means are provided for preventing said PWM signal from oscillating below a minimum frequency.

5. A control system as claimed in preceding claim wherein said address decoder means are responsive to another of said addresses on said address bus for enabling said register means for writing of said PWM data to said register means.

6. A control system as claimed in any preceding claim for controlling the operation of a plurality of motors of a mail processing system.

7. A mail processing system comprising a plurality of motors and a control system according to any preceding claim arranged to control said motors.
